# FASCICULE DE BREVET EUROPEEN

(11) **EP 2 554 942 B1**
(45) Date de publication et mention de la délivrance du brevet: **18.06.2014**
(21) Numéro de dépôt: 12179034.9
(22) Date de dépôt: 02.08.2012
(51) Int. Cl.: G01B 11/03, G01B 11/26

(54) **Système optique de mesure d'orientation à coin de cube et masque**
Optisches Ausrichtungsmesssystem mit Retroreflektor und Maske
Optical system for measuring orientation with corner cube and mask

(30) Priorité: 05.08.2011 FR 1102462
(43) Date de publication de la demande: 06.02.2013
(73) Titulaire: Thales, 92200 Neuilly Sur Seine (FR)
(72) Inventeur: Barbier, Bruno, 33000 BORDEAUX (FR); Potin, Laurent, 33230 COUTRAS (FR); Rouzes, Siegfried, 33185 LE HAILLAN (FR)
(74) Mandataire: Bréda, Jean-Marc

(56) Documents cités:
- JP-A- 2007 521 462
- US-B1- 6 486 955

## Description

Le domaine de l'invention est celui des dispositifs optiques permettant de mesurer l'orientation d'un objet dans l'espace sans contact. Il existe divers domaines d'applications possibles mais l'application principale est la détection de posture de casque de pilote d'aéronef, permettant ainsi de projeter dans sa visière une image en superposition exacte sur le paysage extérieur ou d'asservir différents systèmes de l'appareil sur son regard. La précision recherchée dans de tels systèmes est de l'ordre du milliradian.

Il existe différentes techniques optiques permettant de faire de la mesure d'orientation sur casque. Généralement, on installe sur le casque des éléments remarquables qui sont repérés par un système de caméras. La position des images de ces éléments remarquables permet de déterminer par calcul l'orientation du casque.

Ces éléments peuvent être passifs ou actifs. Les éléments passifs sont éclairés par une source externe. On peut utiliser, à cette fin, des coins de cube rétroréfléchissants qui permettent de réduire les problèmes de lumière parasite dus à l'éclairement solaire. Il suffit de disposer les organes optiques d'émission et de réception sur le même axe.

Les éléments actifs sont généralement des diodes électroluminescentes. Les caméras ont une distance fixe de mise au point et par conséquent une profondeur de champ nécessairement limitée.

Cette technique présente un certain nombre d'inconvénients. La qualité de l'image de chaque point imagé sur le détecteur dépend de la position du casque et de son orientation, limitant ainsi la précision du système si l'on souhaite couvrir un volume de mesure important ou une plage de rotation conséquente.

Le système selon l'invention remédie à ces deux inconvénients. Il comporte essentiellement, monté sur un bâti fixe d'orientation connue, un dispositif optique unique de type télécentrique d'émission et de réception de faisceaux de lumière parallèle. Les faisceaux émis sont issus d'une source ponctuelle, les faisceaux reçus proviennent de la rétroréflexion de la lumière venant de la source par un rétroréflecteur monté sur l'objet mobile dont on cherche à déterminer l'orientation. Le rétroréflecteur comporte un masque de forme particulière. L'analyse de l'image du masque du réflecteur par un détecteur matriciel disposé dans le dispositif optique permet de retrouver l'orientation du rétroréflecteur et par conséquent de l'objet mobile.

On démontre qu'avec ce système de détection, la qualité de la mesure est, par construction, indépendante de la position du casque et de son orientation. En outre, ses autres avantages sont les suivants :
- Un algorithme très simple de détermination de l'orientation ;
- Une adaptation possible de la direction d'éclairage à la position du casque ;
- Une grande insensibilité à l'éclairement solaire ;
- L'emploi de dispositifs entièrement passifs montés sur casque ne nécessitant ni câble de liaison, ni câble d'alimentation électrique.

Plus précisément, l'invention a pour objet un système de détection de la posture d'un objet mobile dans l'espace comprenant un dispositif fixe électro-optique de position et d'orientation connue comprenant au moins une première source d'émission ponctuelle et un capteur matriciel photosensible ; et un ensemble comprenant un coin de cube optique disposé sur l'objet mobile,
caractérisé en ce **que** :
le dispositif fixe électro-optique comporte une optique télécentrique comprenant essentiellement un objectif de projection, un objectif de réception et un élément optique semi-réfléchissant agencés de façon que la première source d'émission ponctuelle soit disposée au foyer de l'objectif de projection par réflexion ou par transmission à travers l'élément optique semi-réfléchissant et que l'image de la première source d'émission ponctuelle soit disposée au foyer de l'objectif de réception par transmission ou par réflexion à travers l'élément optique semi-réfléchissant ;
la face d'entrée du coin de cube comporte un masque en forme de parallélogramme quelconque, chaque côté du parallélogramme comportant un marquage géométrique permettant de l'identifier, l'image du masque sur le capteur matriciel photosensible, par réflexion sur les faces du coin de cube étant l'intersection de la projection du masque et de la projection de son image par le coin de cube par rapport au centre du coin de cube.

Avantageusement, les marquages sont des formes géométriques simples de faible dimension par rapport aux dimensions des côtés et situées au voisinage des extrémités de chaque côté.

Avantageusement, les formes géométriques forment des bossages et/ou des entailles.

Avantageusement, la première source d'émission ponctuelle ou son image est disposée sur l'axe optique commun à l'objectif de projection et à l'objectif de réception.

Avantageusement, le dispositif fixe comporte une matrice de sources d'émission ponctuelles, lesdites sources étant allumées en fonction de la position de l'objet mobile.

L'invention concerne également un premier casque de pilote, **caractérisé en ce qu'**il comporte un coin de cube optique dont la face d'entrée comporte un masque en forme de parallélogramme, chaque côté du parallélogramme comportant un marquage géométrique permettant de l'identifier, ledit coin de cube destiné à fonctionner dans un système de détection de la posture d'un objet mobile comme décrit ci-dessus.

L'invention concerne également un second casque de pilote, **caractérisé en ce qu'**il comporte un dispositif fixe électro-optique d'orientation connue par rapport au casque, ledit dispositif comprenant au moins une première source d'émission ponctuelle, une optique télécentrique et un capteur matriciel photosensible, ledit dispositif destiné à fonctionner dans un système de détection de la posture d'un objet mobile comme décrit ci-dessus.

Enfin, l'invention concerne un système d'arme comportant des moyens de visée, **caractérisé en ce que** les dits moyens comportent un coin de cube optique dont la face d'entrée comporte un masque en forme de parallélogramme, chaque côté du parallélogramme comportant un marquage géométrique permettant de l'identifier, ledit coin de cube étant destiné à fonctionner dans un système de détection de la posture d'un objet mobile comme précédemment décrit. Le système d'arme peut être une arme à feu porté par un fantassin.

L'invention sera mieux comprise et d'autres avantages apparaîtront à la lecture de la description qui va suivre donnée à titre non limitatif et grâce aux figures annexées parmi lesquelles :
La figure 1 représente une vue générale du système de détection de posture selon l'invention ;
La figure 2 représente une vue d'un coin de cube selon l'invention avec son masque ;
La figure 3 représente la formation de l"image M0 d'un point objet M à travers le coin de cube et de leurs images M' et M'0 projetées sur le détecteur ;
La figure 4 représente la construction géométrique de l'image d'un masque par réflexion sur les faces du coin de cube ;
La figure 5 représente un exemple d'un système de marquage du masque ;
La figure 6 représente la construction géométrique de l'image d'un masque marqué par réflexion sur les faces du coin de cube ;
La figure 7 représente un système selon l'invention à matrice de sources lumineuses.

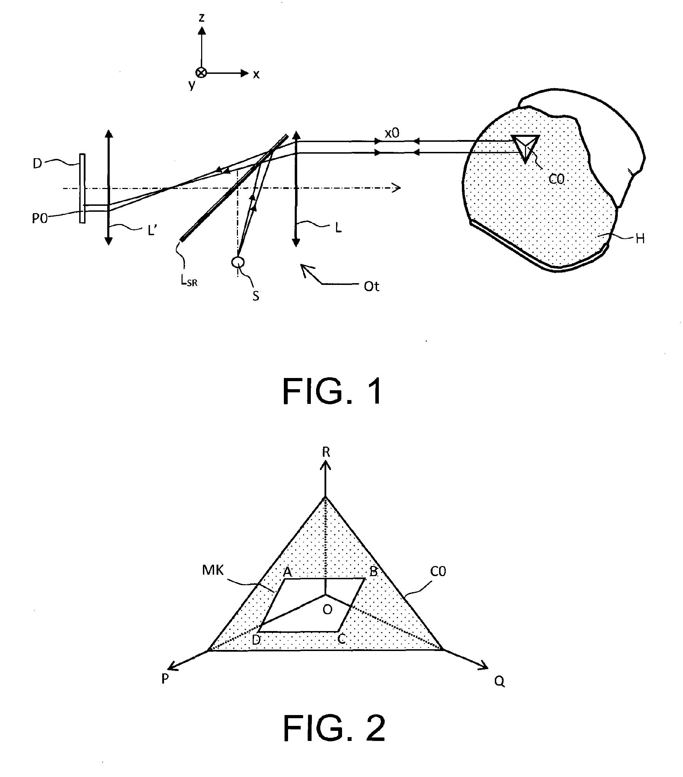

A titre de premier exemple de réalisation, la figure 1 représente un premier mode de réalisation du système de détection selon l'invention dans le cas le plus simple, c'est-à-dire comportant une seule source ponctuelle S et dans le cadre d'une détection d'orientation d'un casque de pilote H. On peut très facilement adapter cette première configuration à d'autres applications.

Le système comprend essentiellement deux sous-ensembles, un dispositif fixe électro-optique Ot et un casque dont on cherche à déterminer l'orientation. Il est référencé dans un repère (O, x, y, z).

Le dispositif fixe électro-optique Ot est situé dans le cockpit d'un aéronef et occupe une position et une orientation connue par rapport au référentiel de l'aéronef.

Le dispositif électro-optique Ot comprend une source de lumière S quasi-ponctuelle. Cette source peut être une diode électroluminescente ou une diode laser.

Il comprend également un système optique télécentrique comportant un objectif de projection L, un objectif de réception L' et un élément optique semi-réfléchissant L_{SR}. L'objectif de projection L comme l'objectif de réception L' peuvent être constitués soit de lentilles simples soit de groupes de lentilles. L'élément optique semi-réfléchissant L_{SR} peut être soit une simple lame plane traitée comme représenté sur les différentes figures soit un cube séparateur. L'ensemble des objectifs de projection et de réception constituent un système afocal, c'est-à-dire que leur foyer est commun.

L'image de la source S est disposée au foyer de l'objectif de projection L par réflexion sur l'élément optique semi-réfléchissant L_{SR}. Par conséquent, l'image de S est collimatée à l'infini par l'objectif L qui émet ainsi un faisceau de lumière parallèle selon une direction x0 comme indiqué sur la figure 1. On peut indifféremment utiliser l'élément optique semi-réfléchissant L_{SR} en réflexion sur la voie émission et en transmission sur la voie réception ou l'inverse.

Le casque H est équipé d'un seul rétro-réflecteur de type coin de cube C0. Un diaphragme ou masque, de forme et de position connues par rapport au coin de cube, est fixé sur la face d'entrée du coin de cube. Le flux collimaté de retour issu du rétroréflecteur en coin de cube C0 est, quelle que soit sa position ou son orientation, projeté en P0 parallèlement à x0 sur le détecteur vertical De en projection cavalière à travers l'objectif afocal constitué des optiques Let L'. A partir de la forme de l'image recueillie sur le détecteur, un calcul simple fournit l'orientation instantanée du casque.

Le principe de mesure d'orientation à partir du dispositif de la figure 1 est décrit ci-dessous. Le coin de cube C0 est représenté en figure 2 dans un repère orthogonal (O, P, Q, R). Les trois faces réfléchissantes orthogonales sont notées POQ, POR et ROQ. Devant le sommet O, est positionné un masque MK transparent en forme de parallélogramme quelconque dont les positions des sommets A, B, C et D par rapport au sommet O sont connues.

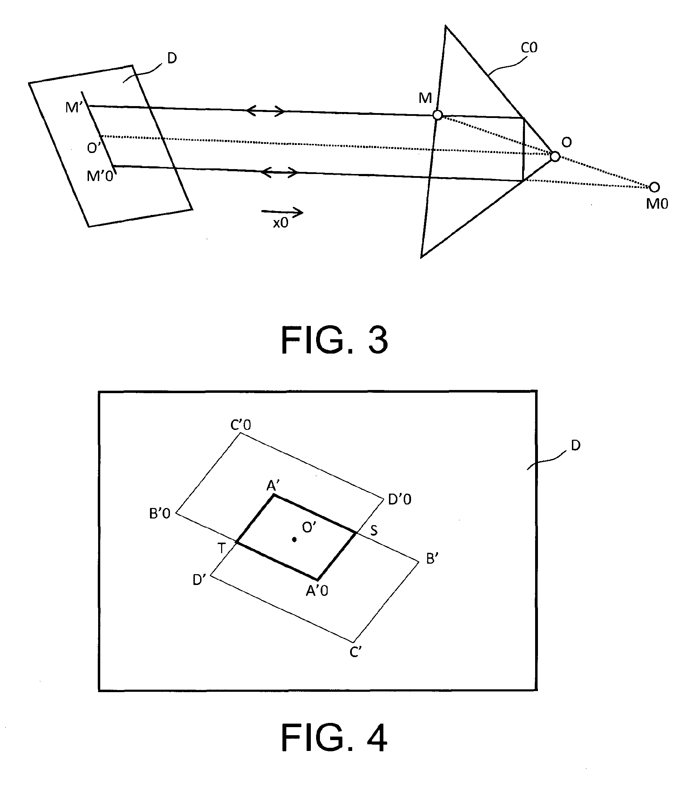

La figure 3 représente l'image sur le détecteur D d'un point M du masque donnée par le coin de cube C0. Lorsque l'on envoie un faisceau de lumière parallèle sur le coin de cube C0, chaque point M du contour du masque et son image M0 par le réflecteur sont, par principe, symétriques par rapport au sommet O du réflecteur.

La projection cavalière conservant la symétrie, les images projetées M'et M'0 des points M et M0 sur le détecteur D sont symétriques par rapport à la projection O' de O. De la même façon, le masque ABCD et son image A0B0C0D0 par le réflecteur C0 sont symétriques par rapport à O. La symétrie conservant le parallélisme, A0B0C0D0 est un parallélogramme.

La projection cavalière conservant le parallélisme, l'image projetée sur le détecteur du masque ABCD est un parallélogramme A'B'C'D', l'image projetée de l'image A0B0C0D0 est aussi un parallélogramme A'0B'0C'0D'0. La projection cavalière conservant la symétrie, le parallélogramme projeté A'B'C'D' est le symétrique par rapport à O' du parallélogramme projeté A'0B'0C'0D'0 comme on le voit sur la figure 4.

L'image lumineuse réelle effectivement obtenue sur le détecteur D est la surface commune aux deux surfaces A'B'C'D' et A'0B'0C'0D'0. Pour une direction de l'axe x0 intérieure à l'angle de sommet O et de base ABCD, cette surface a comme contour les points A', S, A'0 et T comme on le voit sur la figure 4 où cette surface est représentée en traits gras. Elle correspond au flux lumineux incident selon la direction x0, filtré par le diaphragme ABCD, puis réfléchi par le réflecteur de sommet O, filtré par le contour A0B0C0D0, symétrique du contour ABCD et enfin projeté sur le détecteur D parallèlement à x0.

Cette surface lumineuse recueillie sur le détecteur a pour contour un parallélogramme A'-S-A'0-T qui est centré sur O', point de concours des diagonales, et qui est constitué dans le cas général d'un des sommets de la projection A'B'C'D' du masque ABCD et d'une fraction de chacun des côtés A'B' et A'D' de la projection du masque ABCD.

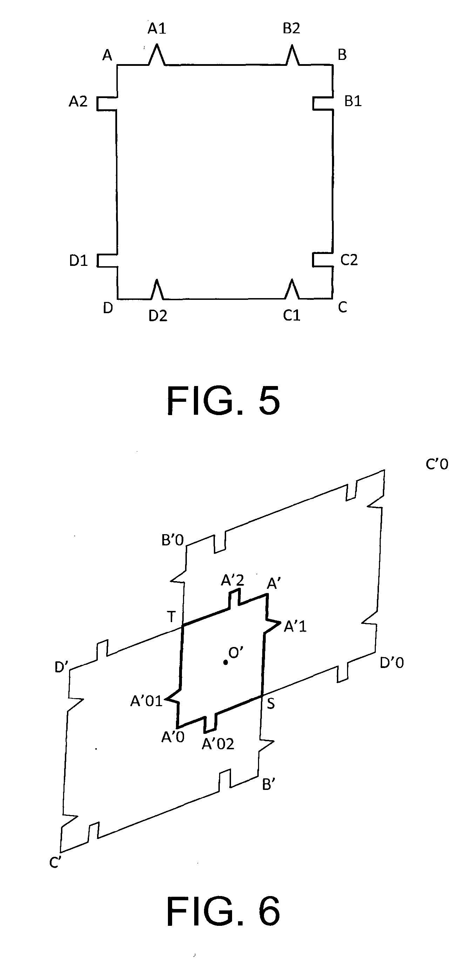

Si le masque du coin de cube est un simple parallélogramme comme indiqué sur les figures 2 et 4, il est impossible de discriminer dans l'image A'-S-A'0-T les sommets et des côtés du masque comme on le voit sur la figure 4. Aussi, comme indiqué sur la figure 5, on rajoute un marquage spécifique à l'extrémité de chaque côté du masque pour différencier les côtés et donc les sommets du masque. Ce marquage est un codage de forme.

A titre d'exemple non limitatif, le codage de la figure 5 est :
- codage du côté AB : entailles A1 et B2 vers l'extérieur du contour de forme triangulaire ;
- codage du côté BC : bossages B1 et C2 vers l'intérieur du contour de forme rectangulaire ;
- codage du côté CD : bossages C1 et D2 de forme triangulaire ;
- codage du côté DA : entailles D1 et A2 de forme rectangulaire.

On comprend que, tout en restant dans le cadre de cette invention, il existe une infinité de codages possibles.

Ce marquage permet sur l'image projetée,
- la différenciation des quatre côtés du diaphragme entre eux, pour identifier le sommet projeté ;
- la différenciation entre les sommets du parallélogramme A'B'C'D' caractérisé par un marquage sur les côtés du sommet, à proximité des sommets et un des « nouveaux » sommets S ou T caractérisé par une absence de marquage à proximité des sommets.

Les quatre éléments exploités sur le parallélogramme lumineux imagé sur le détecteur, sont, dans l'exemple de la figure 6 :
- les positions du centre O' et du sommet A' que l'on repère grâce aux bossage A'1 et A'2,
- les directions d'une des droites portant les côtés A'S et A'T.

Sur cette figure 6, la surface commune est représentée en traits gras comme sur la figure 4.

Il semble qu'il reste une dernière ambigüité à lever. Elle concerne un côté et son image par le réflecteur. Comme on le voit sur la figure 6, il n'existe pas de différenciation sur l'image projetée entre le sommet A' du parallélogramme A'B'C'D' et son homologue A'0 du quadrilatère symétrique A'0B'0C'0D'0. En fait, il n'en est rien. En effet, dans la grande majorité des applications, les débattements angulaires sont limités, d'une part par les limites de l'acceptation angulaire du réflecteur : rotation maximale dans chaque sens, autour des axes y et z du repère fixe, toujours inférieure à 90 degrés et d'autre part par les limites opérationnelles de l'orientation du réflecteur qui sont les rotations maximales dans chaque sens, autour de l'axe x du repère fixe, toujours inférieures à 90 degrés. Ainsi, le point A est toujours « à gauche » de B, le point D est toujours « à gauche » de C, les points A et B sont toujours « au dessus » de C et D.

Il est possible que les deux parallélogrammes projetés aient des fractions de côtés en commun. Dans ce cas, le sommet utilise pour l'analyse peut être soit A', soit B'.

L'analyse de l'image produite sur D permet ensuite de déterminer l'orientation du retro-réflecteur C0. Cette analyse d'image fournit, dans le repère du détecteur, les trois éléments suivants :
- les positions des projections de deux points connus du réflecteur :
   o le sommet O du coin de cube ;
   o un des quatre sommets du contour du masque ;
- l'orientation de la projection d'une direction connue du réflecteur, à savoir un des côtés du contour passant par le sommet précédent.

On obtient à l'aide de ces trois éléments l'orientation de deux directions du coin de cube et donc du casque.

La forme générale en parallélogramme du masque est préférable. D'autres formes géométriques simples seraient possibles comme les quadrilatères ou les triangles, mais elles peuvent conduire dans certaines conditions d'orientation soit à des formes d'images complexes comme des hexagones, soit à des formes d'images dans lesquelles aucun sommet n'est la projection d'un sommet du masque.

Comme on le voit sur la figure 1, si on utilise une source ponctuelle disposée sur l'axe optique, la mesure n'est possible que dans le faisceau de collimation donné par la lentille L. Pour éclairer des zones de mesure plus importantes sans utiliser des optiques de trop grande dimension, il faut déplacer la source de l'axe optique de façon à obtenir des faisceaux collimatés hors d'axe. L'orientation d'éclairage est alors modifiée pour autoriser des déplacements latéraux importants de l'objet mobile. Il existe différents moyens opto-mécaniques pour assurer ce déplacement.

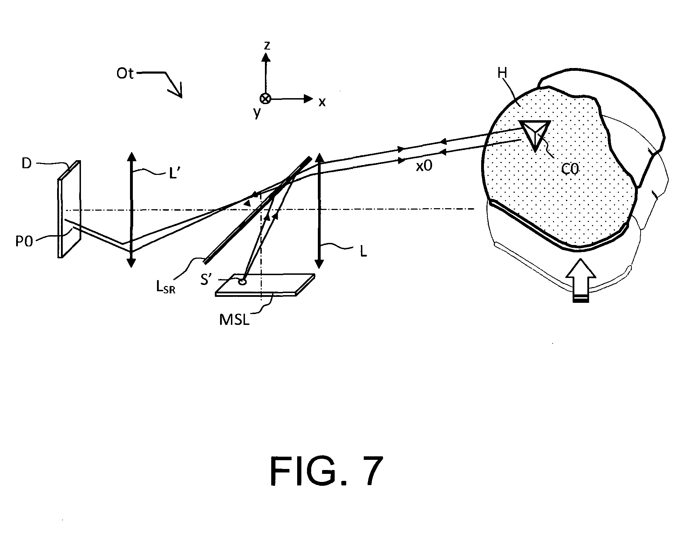

Une façon plus simple est représentée en figure 7. On remplace la source S par une matrice MSL de sources lumineuses S' positionnée sur l'image par la lame semi-réfléchissante LSR dans le plan focal de la lentille L.

Une seule source S' est allumée sur la matrice M. Lorsque l'image P0 arrive en bord du détecteur, configuration repérable par un simple traitement d'image, la source S' est éteinte et une autre source S' de la matrice est allumée de façon à recentrer l'image du coin de cube sur le détecteur D.

Les avantages du système selon l'invention sont les suivants. Le coin de cube fixé sur l'objet mobile et servant à la détection est léger, compact, passif puisque ne comportant pas de liaison électrique, insensible à l'éclairement solaire, insensible aux masses métalliques. Le dispositif optique d'émission-réception est simple tant dans la conception opto-mécanique que dans le traitement numérique des images du coin de cube.

L'ensemble permet de déterminer précisément l'orientation d'un objet mobile indépendamment de sa position. Dans les exemples précédents, l'objet mobile est un casque de pilote et le dispositif fixe est positionné dans une cabine d'aéronef. On peut bien entendu fixer le coin de cube sur un opérateur, par exemple sur sa tête ou sur sa main.

On peut également utiliser le système en tant que système de visée déportée. Le fonctionnement est le suivant. Un système d'armes a sa ligne de visée équipée d'un coin de cube selon l'invention. On peut ainsi connaître l'orientation de la ligne de visée au moyen d'un dispositif d'émission-réception. Une caméra fixe filme une scène à l'infini. Cette scène est reproduite sur un moniteur. L'orientation d'une direction du système d'armes est symbolisée par un réticule mobile incrusté dans l'image sur le moniteur. Un opérateur peut ainsi contrôler précisément l'orientation de son système d'armes par rapport à une cible dans la scène sans avoir à viser. Par conséquent, l'alignement de son oeil, de la cible et de l'objet mobile n'est plus nécessaire, il suffit de contrôler dans l'image la superposition de la cible et du réticule. La position de l'opérateur n'est plus une contrainte.

Dans une autre variante, le dispositif d'éclairage et de prise de vue est porté par le casque d'un fantassin. Le casque est équipé d'un imageur présentant à l'infini un réticule mobile superposé à la scène réelle à l'infini, l'arme du fantassin est équipée du réflecteur, son orientation précise par rapport au casque est symbolisée par la position du réticule mobile affiché dans l'imageur du casque. Le fantassin réalise ainsi une visée déportée dans son casque. On retrouve les avantages précédents. L'alignement de l'oeil du fantassin, de la cible et de l'arme n'est plus nécessaire, l'alignement de l'oeil du fantassin, de la cible et du réticule est suffisant, la position de l'arme par rapport à la tête n'est plus une contrainte.

On peut également utiliser le système selon l'invention comme outillage de mesure léger, amagnétique et précis pour réaliser une cartographie rapide d'une détection de position de casque électromagnétique, outillage de cartographie rapide. De plus, la partie fixe de l'outillage comprenant la source d'éclairage et la partie caméra est déportable hors de la cabine de pilotage.

## Revendications

1. Système de détection de la posture d'un objet mobile dans l'espace comprenant un dispositif fixe électro-optique (Ot) d'orientation connue comprenant au moins une première source d'émission ponctuelle (S) et un capteur matriciel photosensible (D) ; et un ensemble comprenant un coin de cube optique (CO) disposé sur l'objet mobile,
**caractérisé en ce que** :
le dispositif fixe électro-optique comporte une optique télécentrique comprenant essentiellement un objectif de projection (L), un objectif de réception (L') et un élément optique semi-réfléchissant (L_{SR}) agencés de façon que la première source d'émission ponctuelle soit disposée au foyer de l'objectif de projection par réflexion ou par transmission à travers l'élément optique semi-réfléchissant et que l'image de la première source d'émission ponctuelle soit disposée au foyer de l'objectif de réception par transmission ou par réflexion à travers l'élément optique semi-réfléchissant ;
la face d'entrée du coin de cube comporte un masque (MK) en forme de parallélogramme quelconque, chaque côté du parallélogramme comportant un marquage géométrique permettant de l'identifier, l'image du masque sur le capteur matriciel photosensible (D), par réflexion sur les faces du coin de cube étant l'intersection de la projection du masque et de la projection de son image par le coin de cube par rapport au centre (O) du coin de cube.

2. Système de détection de la posture d'un objet mobile selon la revendication 1, **caractérisé en ce que** les marquages sont des formes géométriques simples de faible dimension par rapport aux dimensions des côtés et situées au voisinage des extrémités de chaque côté.

3. Système de détection de la posture d'un objet mobile selon la revendication 2, **caractérisé en ce que** les formes géométriques forment des bossages (A2, B1, C2, D1) et/ou des entailles (A1, B2, C1, D2).

4. Système de détection de la posture d'un objet mobile selon la revendication 1, **caractérisé en ce que** la première source d'émission ponctuelle ou son image est disposée sur l'axe optique commun à l'objectif de projection et à l'objectif de réception.

5. Système de détection de la posture d'un objet mobile selon la revendication 1, **caractérisé en ce que** le dispositif fixe comporte une matrice (MSL) de sources d'émission ponctuelles, lesdites sources étant allumées en fonction de la position de l'objet mobile.

6. Système de détection de la posture d'un objet mobile selon l'une des revendications précédentes, **caractérisé en ce qu'**il est adapté pour être monté sur un casque de pilote (H).

7. Système de détection de la posture d'un objet mobile selon l'une des revendications 1 à 5, **caractérisé en ce que** le dispositif fixe électro-optique (Ot) de position et d'orientation est adapté pour être monté sur un casque de pilote (H).

8. Système de détection de la posture d'un objet mobile selon l'une des revendications 1 à 5, **caractérisé en ce que** l'objet mobile est un système d'arme comportant des moyens de visée.

9. Système de détection de la posture d'un objet mobile selon la revendication 8, **caractérisé en ce que** le système d'arme est une arme à feu.

## Patentansprüche

1. System zum Erkennen der Haltung eines mobilen Objekts im Raum, das eine feste elektrooptische Vorrichtung (Ot) mit bekannter Orientierung umfasst, mit mindestens einer ersten punktförmigen Emissionsquelle (S) und einem fotosensiblen Matrixsensor (D); und eine Baugruppe mit einer auf dem beweglichen Objekt angeordneten optischen Würfelecke (CO),
**dadurch gekennzeichnet, dass**:
die feste elektrooptische Vorrichtung eine telezentrische Optik umfasst, die im Wesentlichen ein Projektionsobjektiv (L), ein Empfangsobjektiv (L') und ein halbreflektierendes optisches Element (L_{SR}) umfasst, das so angeordnet ist, dass die erste punktförmige Emissionsquelle im Fokus des Projektionsobjektivs durch Reflexion oder durch Transmission durch das halbreflektierende optische Element angeordnet ist, und das Bild der ersten punktförmigen Emissionsquelle im Fokus des Empfangsobjektivs durch Transmission oder durch Reflexion durch das halbreflektierende optische Element angeordnet ist;
die Eingangsfläche der Würfelecke eine Maske (MK) in Form eines beliebigen Parallelogramms umfasst, wobei jede Seite des Parallelogramms eine geometrische Markierung aufweist, über die es identifiziert werden kann, wobei das Bild der Maske auf dem fotosensiblen Matrixsensor (D), durch Reflexion auf den Flächen der Würfelecke, der Schnittpunkt der Protektion der Maske und der Protektion seines Bildes durch die Würfelecke in Bezug auf den Mittelpunkt (O) der Würfelecke ist.

2. System zum Erkennen der Haltung eines beweglichen Objekts nach Anspruch 1, **dadurch gekennzeichnet, dass** die Markierungen einfache geometrische Formen mit kleinen Abmessungen in Bezug auf die Abmessungen der Seiten sind, die sich in der Nähe der Enden jeder Seite befinden.

3. System zum Erkennen der Haltung eines beweglichen Objekts nach Anspruch 2, **dadurch gekennzeichnet, dass** die geometrischen Formen Erhebungen (A2, B1, C2, D1) und/oder Vertiefungen (A1, B2, C1, D2) bilden.

4. System zum Erkennen der Haltung eines beweglichen Objekts nach Anspruch 1, **dadurch gekennzeichnet, dass** die erste punktförmige Emissionsquelle oder ihr Bild auf der gemeinsamen optischen Achse mit dem Projektionsobjektiv und dem Empfangsobjektiv angeordnet ist.

5. System zum Erkennen der Haltung eines beweglichen Objekts nach Anspruch 1, **dadurch gekennzeichnet, dass** die feste Vorrichtung eine Matrix (MSL) von punktförmigen Emissionsquellen umfasst, wobei die Quellen in Abhängigkeit von der Position des beweglichen Objekts beleuchtet sind.

6. System zum Erkennen der Haltung eines beweglichen Objekts nach eine der vorherigen Ansprüche, **dadurch gekennzeichnet, dass** es zur Montage am Helm eines Piloten (H) ausgelegt ist.

7. System zum Erkennen der Haltung eines beweglichen Objekts nach einem der Ansprüche 1 is 5, **dadurch gekennzeichnet, dass** die feste elektrooptische Positions- und Orientierungsvorrichtung (Ot) zum Montieren am Helm eines Piloten (H) ausgele ist.

8. System zum Erkennen der Haltung eines beweglichen Objekts nach einem der Ansprüche 1 bis 5, **dadurch gekennzeichnet, dass** das bewegliche Objekt ein Waffensystem ist, das Visiermittel umfasst.

9. System zum Erkennen der Haltung eines beweglichen Objekts nach Anspruch 8, **dadurch gekennzeichnet, dass** das Waffensystem eine Feuerwaffe ist.

## Claims

1. System for detecting the attitude of a movable object in space, comprising a fixed electro-optical device (Ot) having a known orientation which comprises at least a first point-like source of emission (S) and a photosensitive matrix sensor (D); and an assembly comprising an optical cube corner (CO) which is arranged on the movable object,
**characterised in that**:
the fixed electro-optical device comprises a telecentric optical system which substantially comprises a projection objective lens (L), a receiving objective lens (L`) and a semi-reflective optical element (L_{SR}) which are arranged in such a manner that the first point-like source of emission is arranged at the focus of the projection objective lens bey means of reflection or by means of transmission through the semi-reflective optical element and **in that** the image of the first point-like source of emission is arranged at the focus of the receiving objective lens by means of transmission or by means of reflection through the semi-reflective optical element;
the input face of the cube corner comprises a mask (MK) in the form of any parallelogram, each side of the parallelogram comprising a geometric marking which enables it to be identified, the image of the mask on the photosensitive matrix sensor (D), by means of reflection on the faces of the cube corner, being the intersection of the projection of the mask and the projection of the image thereof by the cube corner relative to the centre (O) of the cube corner.

2. System for detecting the attitude of a movable object according to claim 1, **characterised in that** the markings are simple geometric shapes which have small dimensions compared with the dimensions of the sides and which are located in the region of the ends of each side.

3. System for detecting the attitude of a movable object according to claim 2, **characterised in that** the geometric shapes form protrusions (A2, B1, C2, D1) or indentations (A1, B2, C1, D2).

4. System for detecting the attitude of a movable object according to claim 1, **characterised in that** the first point-like source of emission or the image thereof is arranged on the optical axis common to the projection objective lens and the receiving objective lens.

5. System for detecting the attitude of a movable object according to claim 1, **characterised in that** the fixed device comprises a matrix (MSL) of point-like sources of emission, the sources being illuminated in accordance with the position of the movable object.

6. System for detecting the attitude of a movable object according to any one of the preceding claims, **characterised in that** it is suitable for being mounted on a pilot's helmet (H).

7. System for detecting the attitude of a movable object according to any one of claims 1 to 5, **characterised in that** the fixed electro-optical device (Ot) for position and orientation is suitable for being mounted on a pilot's helmet (H).

8. System for detecting the attitude of a movable object according to any one of claims 1 to 5, **characterised in that** the movable object is a weapon system comprising sighting means.

9. System for detecting the attitude of a movable object according to claim 8, **characterised in that** the weapon system is a firearm.
